# EUROPÄISCHE PATENTSCHRIFT

(11) **EP 1 201 510 B1**
(45) Veröffentlichungstag und Bekanntmachung des Hinweises auf die Patenterteilung: **21.12.2005**
(21) Anmeldenummer: 01250359.5
(22) Anmeldetag: 15.10.2001
(51) Int. Cl.: B60R 21/20

(54) **Sicherheitsvorrichtung für Kraftfahrzeuge**
Safety device for vehicles
Dispositif de sécurité pour véhicules

(30) Priorität: 25.10.2000 DE 10052942
(43) Veröffentlichungstag der Anmeldung: 02.05.2002
(73) Patentinhaber: TAKATA-PETRI (Ulm) GmbH, 89081 Ulm (DE)
(72) Erfinder: Aulbach, Alexander, 89073 Ulm (DE)
(74) Vertreter: Baumgärtel, Gunnar

(56) Entgegenhaltungen:
- EP-A- 0 768 215
- US-A- 5 799 971
- US-A- 5 906 395
- US-A- 5 924 724

## Beschreibung

Die Erfindung betrifft eine Sicherheitsvorrichtung für Kraftfahrzeuge mit wenigstens einem in einen Fahrzeugsitz integrierbaren Luftsackmodul, das zumindest einen aufblasbaren und insbesondere als Seitenairbag dienenden Luftsack aufweist.

Es ist grundsätzlich bekannt, Airbags in einen Fahrzeugsitz zu integrieren.

Die gattungsbildende EP0 768 215 A2 beschreibt ein in einen Sitz integrierbares Luftsackmodul mit einem Gasgenerator und einem Luftsack sowie einem Gehäuse 64. Das Modul befindet sich in einem seitlichen Abschnitt der Rückenlehne eines Sitzes. Das Gehäuse deckt den Gasgenerator und den Luftsack gegen die Außenseite des Sitzes ab, wobei das Gehäuse zusätzlich mit einer Sitzbespannung überdeckt ist.

Es ist das der Erfindung zugrundeliegende Problem (Aufgabe), eine Sicherheitsvorrichtung der eingangs genannten Art zu schaffen, die möglichst einfach aufgebaut ist und leicht montiert werden kann.

Die Lösung dieser Aufgabe erfolgt durch die Merkmale des Anspruchs 1 und insbesondere dadurch, daß das Luftsackmodul eine vorgefertigte und als zusammenhängendes Baugruppe montierbare Moduleinheit umfaßt, die zumindest einen aufblasbaren und insbesondere als Seitenairbag dienenden Luftsack sowie einen Gasgenerator aufweist, wobei ein zumindest einen Teil einer Rückwand des Fahrzeugsitzes bildendes Strukturelement gleichzeitig als Modulabdeckung für die Moduleinheit ausgebildet ist.

Das erfindungsgemäß vorgesehene Strukturelement dient gleichzeitig als zumindest ein Teil der Rückwand des Fahrzeugsitzes und als Modulabdeckung für die Moduleinheit. Ein separates Abdeckelement für die Moduleinheit ist daher nicht erforderlich. Erfindungsgemäß wird somit die Anzahl der für die Sicherheitsvorrichtung insgesamt benötigten Bauteile verringert. Dadurch wird der Aufbau der Sicherheitsvorrichtung vereinfacht.

Außerdem erleichtert die Erfindung die Montage der Sicherheitsvorrichtung, da mit dem Anbringen des Strukturelementes am Fahrzeugsitz nicht nur zumindest ein Teil der Rückwand des Sitzes, sondern gleichzeitig auch die Abdeckung für die Moduleinheit montiert wird. Das Strukturelement ist dabei als Rückenlehnenabdeckung des Fahrzeugsitzes vorgesehen.

Die Abdeckung wird zumindest von einem Teil einer Seitenwand des Fahrzeugs bildenden Abschnitt des Strukturelementes gebildet. Hierbei werden sowohl eine Seitenwand als auch die Rückwand des Fahrzeugsitzes zumindest teilweise von dem erfindungsgemäßen Strukturelement gebildet.

Dabei weist die Abdeckung einen Deckel und Seitenwandabschnitte auf, die vorzugsweise zumindest näherungsweise senkrecht zum Deckel verlaufen. An den Seitenwandabschnitten ist die Moduleinheit befestigt.

Die vorgefertigte oder zusammengesetzte und als zusammenhängendes Ganzes handhabbare Moduleinheit kann alle für die Funktion der Sicherheitsvorrichtung erforderlichen wesentlichen Bauteile wie den Luftsack, den Gasgenerator und die gegebenenfalls erforderlichen Halte- und Verbindungselemente umfassen. Eine Vereinzelung oder räumlich verteilte Anordnung der Bestandteile der Moduleinheit ist nicht forderlich. Das Luftsackmodul wird somit von der Moduleinheit und dem Strukturelement gebildet, wobei das Strukturelement bezüglich der Moduleinheit ausschließlich als deren Abdeckung fungiert. Das Strukturelement braucht nicht als Halterung für vereinzelte Bestandteile der Moduleinheit ausgebildet zu sein oder zusätzlich zur Abdeckfunktion weitere Funktionen zu übernehmen. Dies ermöglicht einen besonders einfachen Aufbau des Strukturelementes. Abgesehen von der Abdeckung, die im montierten Zustand von dem Strukturelement übernommen wird, ist die Moduleinheit somit komplett und prinzipiell voll funktionsfähig.

In einer bevorzugten praktischen Ausführungsform der Erfindung ist vorgesehen, daß das Strukturelement wenigstens einen durch den sich aufblasenden Luftsack aufbrechbaren, aufreißbaren, aufklappbaren und/oder wegschwenkbaren Bereich aufweist und insbesondere mit zumindest einer Sollbruchstelle versehen ist.

Das Strukturelement kann die gesamte Rückwand des Fahrzeugsitzes bilden.

Vorzugsweise verläuft die Modulabdeckung zumindest näherungsweise senkrecht zur Rückenlehne des Fahrzeugsitzes. Hierdurch kann das Strukturelement als Abdeckung für solche Moduleinheiten dienen, deren als Seitenairbag dienender Luftsack bei einem Unfall aus dem Seitenwandbereich des Fahrzeugsitzes austritt.

Bevorzugt ist es, wenn das Strukturelement auch ohne am Strukturelement oder am Fahrzeugsitz montierte Moduleinheit am Fahrzeugsitz anbringbar ist. Dadurch kann das Strukturelement auch mit solchen Fahrzeugsitzen verwendet werden, in die keine Moduleinheit integriert werden soll oder beispielsweise aus Platzgründen nicht integriert werden kann.

Eine weitere Ausführung der Erfindung schlägt vor, daß die Moduleinheit am noch nicht am Fahrzeugsitz angebrachten Strukturelement vormontiert werden kann. Die Montage der Sicherheitsvorrichtung wird dadurch noch weiter vereinfacht. Das Strukturelement und die Moduleinheit können an einem beliebigen Ort miteinander verbunden und dann zu gegebener Zeit als eine Einheit am Fahrzeugsitz angebracht werden.

Alternativ ist es auch möglich, zunächst lediglich die Moduleinheit am Fahrzeugsitz zu montieren und das Strukturelement nachträglich am Fahrzeugsitz zur Abdeckung der Moduleinheit und Montage zumindest eines Teils der Rückwand am Fahrzeugsitz anzubringen. Dabei können der Fahrzeugsitz, die Moduleinheit und das Strukturelement derart ausgebildet sein, daß wahlweise eine gemeinsame oder getrennte Montage des Strukturelementes und der Moduleinheit am Fahrzeugsitz möglich ist.

In einer weiteren bevorzugten Ausführungsform der Erfindung ist das Strukturelement einstückig ausgebildet. Das Strukturelement kann insbesondere eine Schalenform aufweisen. Eine weitere bevorzugte Ausführung der Erfindung schlägt vor, daß ein zumindest einen Teil der Rückwand des Fahrzeugsitzes bildender Abschnitt und ein die Modulabdeckung bildender Abschnitt des Strukturelementes zumindest näherungsweise senkrecht zueinander verlaufen.

Gemäß einer besonders bevorzugten Ausführungsform der Erfindung ist die Abdeckung kappenförmig ausgebildet. Der Deckel kann zumindest bereichsweise z. B. aufbrechbar, aufreißbar, aufklappbar und/oder wegschwenkbar ausgebildet sein, um bei einem Unfall eine Entfaltung des sich aufblasenden Luftsacks zu ermöglichen.

Vorzugsweise weist die Moduleinheit eine Basisplatte auf und ist über die Basisplatte am Strukturelement anbringbar. Die Basisplatte kann als Träger für einen Gasgenerator und/oder für ein insbesondere ringförmiges Halteelement des Luftsacks ausgebildet sein.

Die erfindungsgemäße Sicherheitsvorrichtung kann in einem einen Sitz für Kraftfahrzeuge angeordnet sein und umfasst dabei wenigstens ein Strukturelement, das zumindest einen Teil einer Rückwand des Sitzes bildet, und wenigstens ein in den Sitz integrierbares Luftsackmodul, das eine vorgefertigte und als zusammenhängendes Ganzes handhabbare Moduleinheit umfaßt, die zumindest einen aufblasbaren und insbesondere als Seitenairbag dienenden Luftsack sowie einen Gasgenerator aufweist, wobei das Strukturelement gleichzeitig als Modulabdeckung für die Moduleinheit ausgebildet ist.

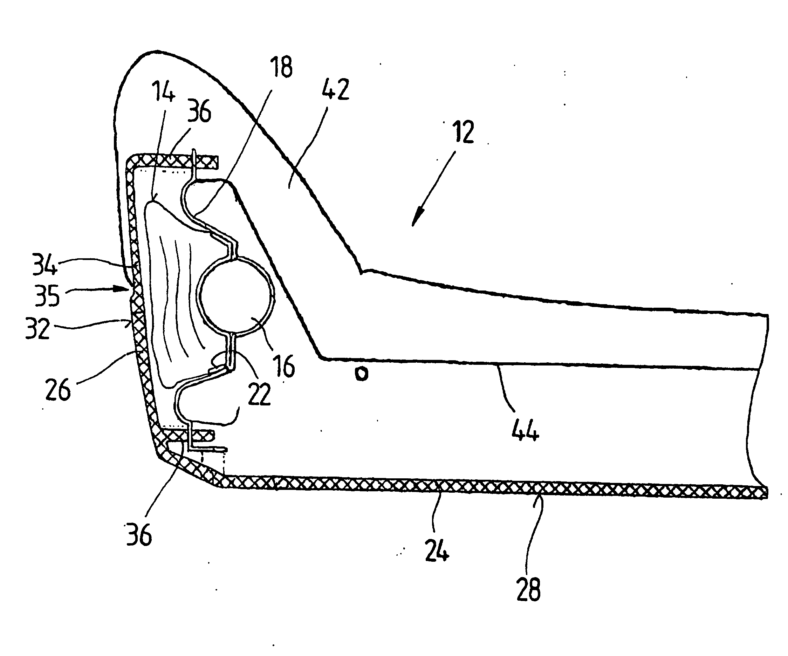

Weitere Ausführungsformen der Erfindung sind auch in den Unteransprüchen, der Beschreibung sowie der Zeichnung angegeben.

Die Erfindung wird im folgenden beispielhaft unter Bezugnahme auf die Zeichnung beschrieben, deren einzige Figur einen teilweisen Horizontalschnitt durch einen mit einer erfindungsgemäßen Sicherheitsvorrichtung versehenden Fahrzeugsitz zeigt.

Die in der Figur teilweise dargestellte Rückenlehne eines Fahrzeugsitzes 12, bei dem es sich beispielsweise um den Fahrersitz eines Kraftfahrzeuges handelt, umfaßt eine Rückwand 28, eine Seitenwand 32 sowie eine Polsterung 42, die sich an einem Unterbau 44 abstützt.

Die Rückwand 28 und die Seitenwand 32 werden von einem einstückigen Strukturelement 24, 26 gebildet. Das Strukturelement weist einen plattenförmigen, die Rückenlehnenabdeckung des Sitzes 12 bildenden Abschnitt 24 sowie einen sich etwa senkrecht zum Rücklehnenabschnitt 24 und somit etwa parallel zu einer nicht dargestellten Seitenwand des Fahrzeugs erstreckenden Abschnitt 26 auf, der als Modulabdeckung 34, 36 für eine nachstehend näher beschriebene Moduleinheit ausgebildet ist.

Die von dem seitlichen Abschnitt 26 des Strukturelementes gebildete Modulabdeckung ist kappenförmig ausgebildet und umfaßt einen einen Teil der Seitenwand 32 des Fahrzeugsitzes 12 bildenden Deckel 34 sowie etwa senkrecht zum Deckel 34 verlaufende Seitenwände oder Seitenwandabschnitte 36. Der Deckel 34 weist einen Bereich geringerer und einen Bereich größerer Wandstärke auf, die durch eine Sollbruchstelle 35 voneinander abgegrenzt sind. Im Bereich geringerer Wandstärke überlappen der Deckel 34 und die Polsterung 42 einander.

Die als Seitenairbaganordnung dienende Moduleinheit umfaßt einen Luftsack 14, der in der Figur schematisch im zusammengefalteten Zustand dargestellt ist. Des weiteren weist die Moduleinheit eine napfförmige Basisplatte 18, einen Gasgenerator 16 sowie ein ringförmiges Halteelement 22 auf. Der Luftsack 14 ist mit seinem eine Gaseintrittsöffnung begrenzenden Bereich zwischen dem Halteelement 22 und der Basisplatte 18 eingeklemmt. Die Moduleinheit ist über radial äußere Abschnitte der Basisplatte 18 an den Seitenwandabschnitten 36 der Modulabdeckung befestigt und auf diese Weise mit dem Strukturelement 24, 26 verbunden.

Die Sollbruchstelle 35 ermöglicht ein definiertes Aufbrechen, Aufreißen, Aufschwenken bzw. Wegschwenken des Deckels 34 bzw. der den Deckel 34 bildenden Bereiche unterschiedlicher Wandstärke durch den sich ausbreitenden Luftsack 14, der im Crashfall mittels des Gasgenerators 16 aufgeblasen wird.

Die Moduleinheit kann unabhängig von dem Fahrzeugsitz 12 und insbesondere von dem Strukturelement 24, 26 vorgefertigt bzw. zusammengebaut und als zusammenhängendes Ganzes bzw. als zusammenhängende Baugruppe gelagert und transportiert werden.

Die Moduleinheit kann am Strukturelement 24, 26 vormontiert werden, bevor die auf diese Weise gebildete Baugruppe als eine Einheit am Fahrzeugsitz 12 angebracht wird.

Es ist jedoch auch möglich, vor dem Anbringen des Strukturelementes 24, 26 am Fahrzeugsitz 12 die Moduleinheit am Fahrzeugsitz 12 zu montieren, beispielsweise durch Befestigen am Unterbau 44.

Des weiteren ist das Strukturelement 24, 26 derart ausgebildet, daß es am Fahrzeugsitz 12, beispielsweise an dessen Unterbau 44, befestigt werden kann, ohne daß zuvor eine Moduleinheit am Fahrzeugsitz 12 oder am Strukturelement 24, 26 montiert worden ist. Das Strukturelement 24, 26 ist daher auch an nicht mit einer Moduleinheit versehenen Fahrzeugsitzen 12 verwendbar.

### Bezugszeichenliste

- 12: Fahrzeugsitz
- 14: Luftsack
- 16: Gasgenerator
- 18: Basisplatte
- 22: Halteelement
- 24: Rückwandabschnitt des Strukturelementes
- 26: Abdeckungsabschnitt des Strukturelementes
- 28: Rückwand des Sitzes
- 32: Seitenwand des Sitzes
- 34: Deckel der Modulabdeckung
- 35: Sollbruchstelle
- 36: Seitenwandabschnitt der Modulabdeckung
- 42: Polsterung
- 44: Unterbau

## Patentansprüche

1. Sicherheitsvorrichtung für Kraftfahrzeuge mit wenigstens einem in einen Fahrzeugsitz (12) integrierbaren Luftsackmodul (14, 16, 18, 22, 24, 26), das eine vorgefertigte Moduleinheit (14, 16, 18, 22) und ein Strukturelement (24, 26) umfasst,
wobei die Moduleinheit (14, 16, 18, 22) zumindest einen aufblasbaren und insbesondere als Seitenairbag dienenden Luftsack (14) sowie einen Gasgenerator (16) aufweist und als zusammenhängende Baugruppe im Fahrzeug montierbar ist,
und wobei das Strukturelement (24, 26) zumindest einen Teil einer Rückwand (28) des Fahrzeugsitzes (12) bildet,
und wobei ein Abschnitt (26) des Strukturelementes (24, 26), der zumindest einen Teil einer Seitenwand (32) des Fahrzeugsitzes (12) bildet, gleichzeitig als Modulabdeckung (34, 36) für die Moduleinheit (14, 16, 18, 22) ausgebildet ist,
**dadurch gekennzeichnet,**
**daß** das Strukturelement (24, 26) auch als Rückenlehnenabdeckung ausgebildet ist, und
**daß** die Modulabdeckung (34, 36) mindestens einen Seitenwandabschnitt (36) aufweist, an dem die Moduleinheit (14, 16, 18, 22) befestigt ist.

2. Vorrichtung nach Anspruch 1, **dadurch gekennzeichnet, daß** die Modulabdeckung (34, 36) zumindest näherungsweise senkrecht zur Rückenlehne des Fahrzeugsitzes (12) verläuft.

3. Vorrichtung nach einem der vorhergehenden Ansprüche, **dadurch gekennzeichnet, daß** das Strukturelement (24, 26) ohne am Strukturelement (24, 26) oder am Fahrzeugsitz (12) montierte Moduleinheit (14, 16, 18, 22) am Fahrzeugsitz (12) anbringbar ist.

4. Vorrichtung nach einem der vorhergehenden Ansprüche, **dadurch gekennzeichnet, daß** die Moduleinheit (14, 16, 18, 22) am noch nicht am Fahrzeugsitz (12) angebrachten Strukturelement (24, 26) vormontierbar ist.

5. Vorrichtung nach einem der vorhergehenden Ansprüche, **dadurch gekennzeichnet, daß** das Strukturelement (24, 26) einstückig ausgebildet ist.

6. Vorrichtung nach einem der vorhergehenden Ansprüche, **dadurch gekennzeichnet, daß** das Strukturelement (24, 26) schalenförmig ausgebildet ist.

7. Vorrichtung nach einem der vorhergehenden Ansprüche, **dadurch gekennzeichnet, daß** ein zumindest einen Teil der Rückwand (28) des Fahrzeugsitzes (12) bildender Abschnitt (24) und ein die Modulabdeckung (34, 36) bildender Abschnitt (26) des Strukturelementes (24, 26) zumindest näherungsweise senkrecht zueinander verlaufen.

8. Vorrichtung nach einem der vorhergehenden Ansprüche, **dadurch gekennzeichnet, daß** die Modulabdeckung (34, 36) kappenförmig ausgebildet ist.

9. Vorrichtung nach Anspruch 8, **dadurch gekennzeichnet, daß** die Modulabdeckung einen Deckel (34) und zu diesem zumindest näherungsweise senkrecht verlaufende Seitenwandabschnitte (36) aufweist.

10. Vorrichtung nach einem der vorhergehenden Ansprüche, **dadurch gekennzeichnet, daß** die Moduleinheit (14, 16, 18, 22) eine Basisplatte (18) aufweist und über die Basisplatte (18) am Strukturelement (24, 26) anbringbar ist.

11. Vorrichtung nach Anspruch 10, **dadurch gekennzeichnet, daß** die Basisplatte (18) als Träger für den Gasgenerator (16) und/oder für ein insbesondere ringförmiges Halteelement (22) des Luftsacks (14) ausgebildet ist.

12. Vorrichtung nach einem der vorhergehenden Ansprüche, **dadurch gekennzeichnet, daß** das Strukturelement (24, 26) wenigstens einen durch den sich aufblasenden Luftsack (14) aufbrechbaren, aufreißbaren, aufklappbaren und/oder wegschwenkbaren Bereich (34) aufweist und insbesondere mit zumindest einer Sollbruchstelle (35) versehen ist.

13. Vorrichtung nach einem der vorhergehenden Ansprüche, **dadurch gekennzeichnet dass** die Vorrichtung an einem Fahrzeugsitz angeordnet ist.

## Claims

1. Safety device for motor vehicles, having at least one airbag module (14, 16, 18, 22, 24, 26) which can be integrated in a vehicle seat (12) and comprises a premanufactured modular unit (14, 16, 18, 22) and a structural element (24, 26),
the modular unit (14, 16, 18, 22) having at least one inflatable airbag (14) serving, in particular, as a side airbag, and a gas generator (16), and being able to be fitted in the vehicle as a cohesive subassembly,
and the structural element (24, 26) forming at least part of a back wall (28) of the vehicle seat (12),
and a section (26) of the structural element (24, 26) which forms at least part of a side wall (32) of the vehicle seat (12) being designed at the same time as a module covering (34, 36) for the modular unit (14, 16, 18, 22),
**characterized in that**
the structural element (24, 26) is also designed as the backrest covering, and
**in that** the module covering (34, 36) has at least one side wall section (36), to which the modular unit (14, 16, 18, 22) is fastened.

2. Device according to Claim 1, **characterized in that** the module covering (34, 36) runs at least approximately perpendicular with respect to the backrest of the vehicle seat (12).

3. Device according to one of the preceding claims, **characterized in that** the structural element (24, 26) can be attached to the vehicle seat (12) without a modular unit (14, 16, 18, 22) being fitted to the structural element (24, 26) or to the vehicle seat (12).

4. Device according to one of the preceding claims, **characterized in that** the modular unit (14, 16, 18, 22) can be pre-fitted to the structural element (24, 26) which is not yet attached to the vehicle seat (12).

5. Device according to one of the preceding claims, **characterized in that** the structural element (24, 26) is of one-piece design.

6. Device according to one of the preceding claims, **characterized in that** the structural element (24, 26) is of shell-shaped design.

7. Device according to one of the preceding claims, **characterized in that** a section (24) forming at least part of the back wall (28) of the vehicle seat (12) and a section (26) forming the module covering (34, 36), of the structural element (24, 26) run at least approximately perpendicular with respect to each other.

8. Device according to one of the preceding claims, **characterized in that** the module covering (34, 36) is designed in the form of a cap.

9. Device according to Claim 8, **characterized in that** the module covering has a cover (34) and side wall sections (36) running at least approximately perpendicular with respect to the latter.

10. Device according to one of the preceding claims, **characterized in that** the modular unit (14, 16, 18, 22) has a baseplate (18) and can be attached to the structural element (24, 26) via the baseplate (18).

11. Device according to Claim 10, **characterized in that** the baseplate (18) is designed as a support for the gas generator (16) and/or for an, in particular, annular retaining element (22) of the airbag (14).

12. Device according to one of the preceding claims, **characterized in that** the structural element (24, 26) has at least one region (34) which can be broken open, torn open, swivelled open and/or pivoted away by the inflating airbag (14) and, in particular, is provided with at least one predetermined breaking point (35).

13. Device according to one of the preceding claims, **characterized in that** the device is arranged on a vehicle seat.

## Revendications

1. Dispositif de sécurité pour véhicules automobiles, comprenant au moins un module de sac à gaz (14, 16, 18, 22, 24, 26) susceptible d'être intégré dans un siège (12) du véhicule et qui comprend une unité de module (14, 16, 18, 22) préfabriquée et un élément structurel (24, 26),
dans lequel l'unité de module (14, 16, 18, 22) comprend au moins un sac à gaz (14) gonflable et servant en particulier d'airbag latéral, ainsi qu'un générateur de gaz (16) et est susceptible d'être monté sous la forme d'un ensemble structurel cohérent dans le véhicule,
dans lequel l'élément structurel (24, 26) forme au moins une partie de la paroi arrière (28) du siège de véhicule (12),
et dans lequel un tronçon (26) de l'élément structurel (24, 26), qui forme au moins une partie d'une paroi latérale (32) du siège de véhicule (12), est réalisé également comme un recouvrement de module (34, 36) pour l'unité de module (14, 16, 18, 22),
**caractérisé en ce que** :
l'élément structurel (24, 26) est également réalisé comme un recouvrement de dossier, et **en ce que**
le recouvrement de module (34, 36) présente au moins un tronçon de paroi latérale (36) sur lequel est fixée l'unité de module (14, 16, 18, 22).

2. Dispositif selon la revendication 1, **caractérisé en ce que** le recouvrement de module (34, 36) s'étend au moins approximativement perpendiculairement au dossier du siège de véhicule (12).

3. Dispositif selon l'une des revendications précédentes, **caractérisé en ce que** l'élément structurel (24, 26) peut être monté sur le siège de véhicule (12) sans que l'unité de module (14, 16, 18, 22) soit montée sur l'élément structurel (24, 26) ou sur le siège de véhicule (12).

4. Dispositif selon l'une des revendications précédentes, **caractérisé en ce que** l'unité de module (14, 16, 18, 22) peut être prémontée sur l'élément structurel (24, 26) qui n'est pas encore monté sur le siège de véhicule (12).

5. Dispositif selon l'une des revendications précédentes, **caractérisé en ce que** l'élément structurel (24, 26) est réalisé d'un seul tenant.

6. Dispositif selon l'une des revendications précédentes, **caractérisé en ce que** l'élément structurel (24, 26) est réalisé sous forme de coque.

7. Dispositif selon l'une des revendications précédentes, **caractérisé en ce qu'**un tronçon (24) qui forme au moins une partie de la paroi arrière (28) du siège de véhicule (12), et un tronçon (26) de l'élément structurel (24, 26) qui forme le recouvrement de module (34, 36) s'étendent au moins approximativement perpendiculairement l'un à l'autre.

8. Dispositif selon l'une des revendications précédentes, **caractérisé en ce que** le recouvrement de module (34, 36) est réalisé sous forme de capuchon.

9. Dispositif selon la revendication 8, **caractérisé en ce que** le recouvrement de module comprend un couvercle (34) et des tronçons de paroi latérale (36) qui s'étendent au moins approximativement perpendiculairement à celui-ci.

10. Dispositif selon l'une des revendications précédentes, **caractérisé en ce que** l'unité de module (14, 16, 18, 22) comprend une plaque de base (18) et peut être montée sur l'élément structurel (24, 26) via la plaque de base (18).

11. Dispositif selon la revendication 10, **caractérisé en ce que** la plaque de base (18) est réalisée comme un support pour le générateur de gaz (16) et/ou pour un élément de maintien (22), en particulier de forme annulaire, du sac à gaz (14).

12. Dispositif selon l'une des revendications précédentes, **caractérisé en ce que** l'élément structurel (24, 26) comprend au moins une zone (34) susceptible d'être rompue, arrachée, pivotée et/ou rabattue par le sac à gaz (14) lorsqu'il se gonfle, et est en particulier pourvu d'au moins une zone de rupture initiale (35).

13. Dispositif selon l'une des revendications précédentes, **caractérisé en ce que** le dispositif est agencé sur un siège de véhicule.
